# EUROPEAN PATENT SPECIFICATION

(11) **EP 3 103 635 B1**
(45) Date of publication and mention of the grant of the patent: **17.08.2022**
(21) Application number: 15761134.4
(22) Date of filing: 10.03.2015
(51) Int. Cl.: B32B 3/04, B32B 15/04, B32B 27/32, B32B 7/04, B32B 7/12, B32B 1/00, B32B 27/28, B32B 27/16, B32B 27/34, B32B 27/36, B32B 27/30, F25D 23/06, B32B 27/06, B32B 15/20

(54) **VACUUM INSULATING MATERIAL AND REFRIGERATOR INCLUDING SAME**
VAKUUMISOLATIONSMATERIAL UND KÜHLSCHRANK DAMIT
MATÉRIAU D'ISOLATION SOUS VIDE ET RÉFRIGÉRATEUR LE COMPRENANT

(30) Priority: 11.03.2014 KR 20140028234; 26.06.2014 KR 20140078761
(43) Date of publication of application: 14.12.2016
(73) Proprietor: Samsung Electronics Co., Ltd., Suwon-si, Gyeonggi-do 16677 (KR)
(72) Inventor: KAL, Seung Hoon, Anyang-si Gyeonggi-do 431-801 (KR); KIM, Hyung Sung, Yongin-si Gyeonggi-do 448-543 (KR); PARK, Jong Sung, Seoul 156-724 (KR); YOOK, Se Won, Seoul 138-748 (KR)
(74) Representative: Walaski, Jan Filip
(86) International application number: PCT/KR2015/002299
(87) International publication number: WO 2015/137700

(56) References cited:
- EP-A1- 2 884 208
- JP-A- 2013 002 580
- JP-A- 2013 019 475
- KR-A- 20090 026 045
- KR-A- 20110 033 203
- KR-A- 20130 012 666
- KR-A- 20130 012 666
- KR-A- 20140 013 888
- KR-A- 20140 013 888
- US-A- 4 486 482
- US-A1- 2006 088 685

## Description

### [Technical Field]

Embodiments of the present disclosure relate to a vacuum insulating material and a refrigerator including the same, and more particularly, a vacuum insulating material having an improved structure as to enhance insulation and durability, and a refrigerator including the same.

### [Background Art]

The energy that mankind consumes is scarce, and global warming caused by carbon dioxide that is generated by using the energy is one of the biggest problems that human race faces along with the energy crisis. Accordingly, energy regulations of each country are reinforced every day, and the energy rating system with respect to household appliances is a challenge that each manufacturer has. The energy regulations of any government in the world demanding maximized efficiency with less energy are well in accord with the demands of consumers wanting higher storage capacity and lower power consumption. Particularly, with respect to refrigerators, many researches have been conducted in several decades in the past, and researches with respect to a cooling cycle, a compressor, and a heat exchanger have already reached the limit. Thus, recently, researches with respect to heat loss have been a mainstream, and many attempts have been made as to increase energy efficiency by reinforcing heat insulating performance of refrigerators.

The conventional heat insulating material such as polyurethane is provided with thermal conductivity of about 20mK/m ○ K, and in a case when using such, the thickness of an outside wall of a refrigerator becomes thicker, and the storage capacity of the refrigerator is decreased. Thus, as to solve the difficulty as such, a use of a vacuum insulating material having superior heat insulating performance is needed.

However, the Heat Bridge of vacuum insulating material, that is, a phenomenon in which heat flows through an edge of the vacuum insulating material and durability are in a contradicting relationship with respect to each other, and thus a limitation is present in manufacturing the efficient vacuum insulating material.

US2006/0088685, KR2014-0013888, US4486482 and EP2884208 each disclose a vacuum insulating material.

### [Disclosure]

### [Technical Problem]

The present disclosure is directed to providing a vacuum insulating material having an improved structure as to effectively prevent gas and moisture penetration, and a refrigerator including the same.

The present disclosure is also directed to providing a vacuum insulating material having an improved structure as to prevent Heat Bridge and enhance durability, and a refrigerator including the same.

The present disclosure is also directed to providing a vacuum insulating material having an improved structure as to decrease volume of the vacuum insulating material, and a refrigerator including the same.

### [Technical Solution]

In accordance with the present invention, there is provided a vacuum heat insulating material according to claim 1. Optional features are set out in the dependent claims.

Also, the first envelope may include an aluminum deposition envelope, and the second envelope includes an aluminum foil envelope.

Also, the vacuum insulating material may further include a blocking layer disposed between the core material and the second envelope, wherein the blocking layer is welded or adhered to the second envelope to form an integral unit with the second envelope.

Also, the first envelope and the second envelope each may include an aluminum deposition envelope.

Also, the first envelope may include a first domain formed along an edge of the first envelope and a second domain formed at an inner side of the first domain, and the blocking layer may be bonded to the second domain.

Also, the blocking layer may be further bonded to at least a part of the first domain.

Also, the second domain may include a bent portion bent at an edge of the core material.

Also, the first envelope may have a lower thermal conductivity than that of the second envelope, and the first domain may be bent such that the second envelope is positioned between the core material and the first domain.

Also, the blocking layer may have the same width as the core material.

Also, the blocking layer may have a width smaller than the core material.

Also, the first envelope may include a welding layer facing the accommodating space in an inner side direction of the core material.

Also, the second envelope may include a sealing layer facing the accommodating space in an inner side direction of the core material.

Also, the first envelope may include a welding layer that faces the accommodating space in an inner side direction of the core material, the second envelope may include a sealing layer that faces the accommodating space in the inner side direction of the core material, and the welding layer and the sealing layer may be bonded to each other by welding or adhesion in at least a part of the first domain.

Also, the welding layer and the sealing layer each may include at least one of LLDPE ((Linear Low-Density Polyethylene) and LDPE (Low Density Polyethylene).

Also, the blocking layer may include a base layer facing the welding layer and bonded to the welding layer, and the base layer may be bonded to the welding layer by welding or adhesion.

Also, the blocking may further include at least one of at least one metallic layer and an inorganic deposition layer that are staked on the base layer toward the core material.

Also, the blocking layer may include a metallic layer facing the welding layer and bonded to the welding layer.

Also, the first envelope may further include at least one barrier layer disposed on the welding layer toward an outer side of the core material.

Also, the at least one barrier layer may include a substrate layer and a deposition layer provided on the substrate layer as to block gas and moisture being introduced toward the core material, and the deposition layer may include at least one of Al, SiO2, and Al₂O₃.

Also, the at least one barrier layer may further include a penetration preventing layer provided between the welding layer and the substrate layer, and the penetration preventing layer may include at least one of EVOH (Ethylene Vinyl Alcohol) and VM-EVOH (Vacuum Metalized-Ethylene Vinyl Alcohol).

An exemplary aspect of the present disclosure provides a vacuum insulating material, including: a core material; a first envelope disposed at an outer side of the core material; a blocking layer disposed between the core material and the first envelope and bonded to the first envelope as to be integrally formed with the first envelope; and a second envelope having a thermal conductivity greater than a thermal conductivity of the first envelope and coupled to the first envelope to form an accommodating space in which the core material and the blocking layer are accommodated, wherein the first envelope and the second envelope bonded to each other by welding or adhesion to form an extension portion extended toward an outer side of the accommodating space.

Here, the extension portion may be bent such that the first envelope is positioned at an outer side of the second envelope.

Also, the first envelope may include a welding layer to which the blocking layer is bonded, and a barrier layer stacked at an outer side of the welding layer.

Also, the second envelope may include a sealing member surrounding the core material, and the welding layer and the sealing member are bonded to each other to form the extension portion.

Also, the welding layer and the sealing member each may include at least one of LLDPE (Linear Low-Density Polyethylene) and LDPE (Low Density Polyethylene).

Also, the barrier layer may be provided in a plurality of layers, the plurality of layers may include a substrate layer and a deposition layer disposed facing the substrate layer as to block gas and moisture being introduced toward the core material, and the deposition layer may include at least one of Al, SiO2, and Al₂O₃.

Also, the plurality of layers may further include a penetration preventing layer provided between the welding layer and the substrate layer, and the penetration preventing layer includes at least one of EVOH (Ethylene Vinyl Alcohol) and VM-EVOH (Vacuum Metalized-Ethylene Vinyl Alcohol).

Also, the plurality of layers may further include a protective layer provided on the deposition layer as to absorb an outside impact, and the protective layer may include at least one of PET (Polyethylene Phthalate) and Nylon.

Also, the blocking layer may include a first layer bonded to the welding layer by welding or adhesion, and a second layer stacked on the first layer toward an inner side of the core material, and the second layer may include at least one of an inorganic deposition layer and a plurality of metallic layers.

Another exemplary aspect of the present disclosure provides a refrigerator having an outer case forming an exterior appearance of the refrigerator, an inner case provided at an inside the outer case to form a storage compartment, and a vacuum insulating material positioned between the outer case and the inner case, wherein; the vacuum insulating material includes a core material; a first envelope disposed at an outer side of the core material as to face an inner surface of the outer case; a blocking layer disposed between the core material and the first envelope and bonded to the first envelope as to be integrally formed with the first envelope; and a second envelope having a thermal conductivity larger than a thermal conductivity of the first envelope and configured coupled to the first envelope while facing an outer surface of the inner case to form an accommodating space in which the core material and the blocking layer are accommodated, and the second envelope is bonded along an edge of the first envelope by welding or adhesion.

Here, the first envelope may be coupled to an inner surface of the outer case.

Yet another exemplary aspect of the present disclosure provides a vacuum insulating material, including: a core material; a first envelope disposed at an outer side of the core material; a second envelope having a thermal conductivity different from that of the first envelope, and coupling to the first envelope to form an accommodating space in which the core material is accommodated; and an extension portion provided to be extended in an outer side direction of the accommodating space, wherein the first envelope and the second envelope are bonded to each other by welding or adhesion on the whole of the extension portion.

Here, the extension portion may connect a first point formed in an outermost position in which the first envelope and the second envelope are bonded to each other in an outer side direction of the accommodating space and a second point in which the extension portion and the core material are bonded to each other.

Also, the first envelope may have a lower thermal conductivity than that of the second envelope.

Also, the first envelope may include an aluminum deposition envelope, and the second envelope includes an aluminum foil envelope.

Also, the first envelope and the second envelope each may include a coupling layer facing the accommodating space in an inner side direction of the core material, and the coupling layers of the first envelope and the second envelope are bonded to each other by welding or adhesion.

Also, the coupling layer may include at least one of LLDPE (Linear Low-Density Polyethylene) and LDPE (Low Density Polyethylene).

Also, the vacuum insulating material may further include: a blocking layer disposed between the core material and at least one of the first envelope and the second envelope.

Also, the blocking layer may be bonded to at least one of the first envelope and the second envelope to form an integral unit with at least one of the first envelope and the second envelope.

Also, the blocking layer may have a width equal to or smaller than the core material.

Also, the blocking layer may have a width larger than the core material.

Also, the extension portion may connect a first point formed in an outermost position in which the first envelope and the second envelope are bonded to each other in an outer side direction of the accommodating space and a second point in which the extension portion and the core material are bonded to each other, and at least one end of the blocking layer extended toward an outer side direction of the accommodating space may be positioned between the first point and the second point.

Also, the vacuum heating insulating material may further include: a blocking layer disposed between the core material and any one of the first envelope and the second envelope having a lower thermal conductivity.

### [Advantageous Effects]

According to the present disclosure, by bonding a first envelope and a second envelope to each other by welding or adhesion, durability of a vacuum insulating material can be improved.

By using a hybrid envelope including a first envelope and a second envelope having different thermal conductivities bonded to each other, Heat Bridge can be effectively prevented.

By disposing a blocking layer between a core material and a first envelope, bonded to the first envelope, the penetration of gas and moisture can be decreased.

By using a vacuum insulating material provided with thin thickness and superior heat insulating performance between an outer case and an inner case of a refrigerator, a slim design of the refrigerator can be implemented and at the same time the storage capacity of the refrigerator can be increased.

### [Description of Drawings]

FIG. 1 is a perspective view illustrating an exterior appearance of a refrigerator in accordance with one embodiment of the present disclosure.
FIG. 2 is a cross-sectional view illustrating the refrigerator in accordance with one embodiment of the present disclosure.
FIG. 3 is an enlarged cross-sectional view illustrating one portion of FIG. 2.
FIG. 4 is a perspective view illustrating a vacuum insulating material in accordance with one embodiment of the present disclosure.
FIG. 5 is a cross-sectional view illustrating a state prior to a first envelope and a second envelope of the vacuum insulating material in accordance with one embodiment of the present disclosure being coupled.
FIG. 6 is a cross-sectional view illustrating a state prior to an extension portion of the vacuum insulating material in accordance with one embodiment of the present disclosure being bent.
FIG. 7 is an enlarged cross-sectional view illustrating the first envelope of the vacuum insulating material in accordance with one embodiment of the present disclosure.
FIG. 8 is an enlarged cross-sectional view illustrating a portion 'Q' of the vacuum insulating material of FIG. 6.
FIG. 9 is an enlarged cross-sectional view illustrating a first envelope of a vacuum insulating material in accordance with another embodiment of the present disclosure.
FIG. 10 is an enlarged cross-sectional view illustrating a second envelope of the vacuum insulating material in accordance with one embodiment of the present disclosure.
FIG. 11 is an enlarged cross-sectional view illustrating an extension portion of the vacuum insulating material in accordance with one embodiment of the present disclosure.
FIG. 12 is a cross-sectional view illustrating a state of the bent extension portion in accordance with one embodiment of the present disclosure.
FIG. 13 is a cross-sectional view illustrating a state prior to bending of the extension portion of the vacuum insulating material in accordance with another embodiment of the present disclosure.
FIG. 14 is a cross-sectional view illustrating a state of the bent extension portion in accordance with another embodiment of the present disclosure.
FIG. 15 is a cross-sectional view illustrating a state prior to bending of the extension portion of the vacuum insulating material in accordance with still another embodiment of the present disclosure.

### [Modes of the Invention]

Hereinafter, preferred embodiments of the present disclosure will be described in detail with reference to the accompanying drawings. Meanwhile, terms used in the following description such as "front end", "rear end", "upper portion, "lower portion", "top", "bottom", etc., are defined based on the drawings, and the shape and position of each component are not limited by these terms.

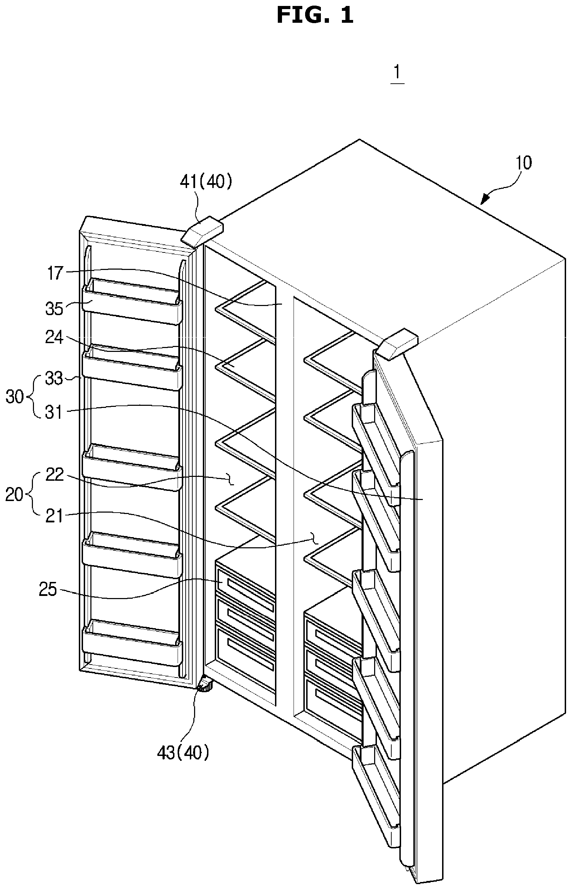

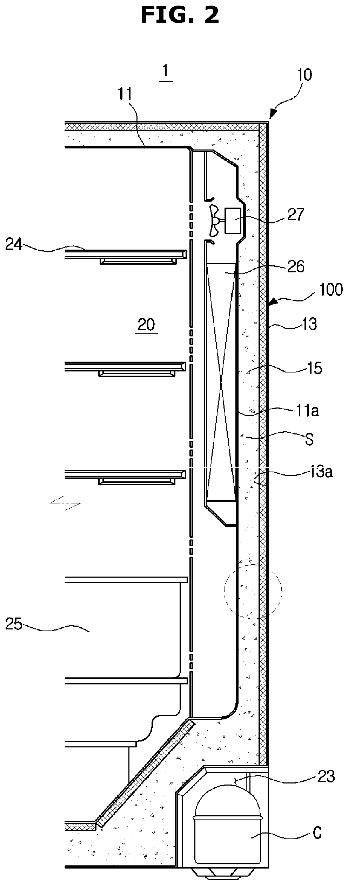

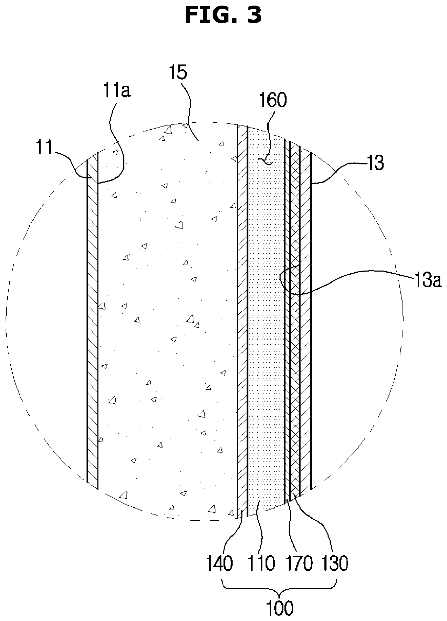

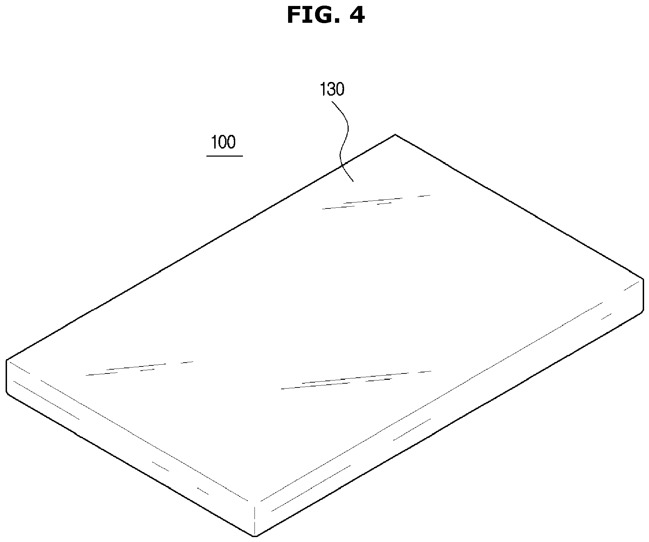

FIG. 1 is a perspective view illustrating an exterior appearance of a refrigerator in accordance with one embodiment of the present disclosure, FIG. 2 is a cross-sectional view illustrating the refrigerator in accordance with one embodiment of the present disclosure, FIG. 3 is an enlarged cross-sectional view illustrating one portion of FIG. 2, and FIG. 4 is a perspective view illustrating a vacuum insulating material in accordance with one embodiment of the present disclosure.

Referring to FIG. 1 to FIG. 4, a refrigerator 1 includes a body 10 forming an exterior appearance of the refrigerator 1 and a storage compartment 20 provided at an inside the body 10 such that a front surface of the storage compartment 20 is open.

The body 10 may include an inner case 11 forming the storage compartment 20, and an outer case 13 forming the exterior appearance, and may include a cool air supplying apparatus configured to supply cool air to the storage compartment 20.

The cool air supplying apparatus includes a compressor C, a condenser (not shown), an expansion valve (not shown), an evaporator 26, and a blower fan 27, and a foam insulating member 15 may be formed between the inner case 11 and the outer case 13 of the body 10 as to prevent a leakage of cool air of the storage compartment 20.

A machine room 23 may be provided at a lower side of a rear of the body 10, in which the compressor C configured to compress a refrigerant and the condenser configured to condense the compressed refrigerant are installed.

The storage compartment 20 is divided into left and right sides by a dividing wall 17, while a refrigerating compartment 21 is provided at the right side of the body 10 and a freezing compartment 22 is provided at the left side of the body 10.

The refrigerator 1 may further include a door 30 to open/close the storage compartment 20.

The refrigerating compartment 21 and the freezing compartment 22 each is open/closed by a refrigerating compartment door 31 and a freezing compartment door 33 each rotatably coupled to the body 10, and a plurality of door guards 35 may be provided at rear surfaces of the refrigerating compartment door 31 and the freezing compartment door 33 as to store food.

A plurality of shelves 24 is provided at the storage compartment 20 to divide the storage compartment 20 into a plurality of units, and material such as food is stacked at an upper portion of the shelves 24.

In addition, a plurality of storage boxes 25 may be provided at the storage compartment 20 in a way to be deposited and withdrawn in a sliding method.

The refrigerator 1 may further include a hinge module 40 having an upper hinge 41 and a lower hinge 43 such that the door 30 is rotatably coupled into the body 10.

A foaming space 'S' is provided between the inner case 11 forming the storage compartment 20 and the outer case 13 coupled to an outer side of the inner case 11 to form an exterior appearance, and the foam insulating member 15 is filled in the foaming space 'S'.

A Vacuum Insulation Panel (VIP) 100 may be filled together with the foam insulating member 15 as to reinforce heat insulating performance of the foam insulating member 15.

The Vacuum Insulation Panel 100 includes a core material 110 and envelopes 130 and 140, and the envelopes 130 and 140 are referred to as key elements configured to maintain lifespan of the Vacuum Insulation Panel 100 by blocking microscopic gas and moisture from penetrating to an inside that is in a vacuum state.

The envelopes 130 and 140 of the Vacuum Insulation Panel 100 may include a first envelope 130 and a second envelope 140.

The first envelope 130 may be disposed at an outer side of the core material 110. The second envelope 140 may be coupled to the first envelope 130 to form an accommodating space 160 in which the core material 110 is accommodated.

The first envelope 130 and the second envelope 140 may be bonded to each other by welding or adhesion. When the first envelope 130 and the second envelope 140 are bonded to each other by welding or adhesion, a gap or a passage through which at least one of gas and moisture can be moved is closed, and therefore the penetration of at least one of gas and moisture toward the core material 110 may become difficult. Accordingly, durability of the Vacuum Insulation Panel 100 may be improved. In addition, by bonding the first envelope 130 and the second envelope 140 to each other by welding or adhesion, manufacturability of the Vacuum Insulation Panel 100 may be improved. That is, when the envelopes 130 and 140 of the Vacuum Insulation Panel 100 are damaged, it is difficult to maintain a vacuum state of the accommodating space 160 in which the core material 110 is generally accommodated. However, when the first envelope 130 and the second envelope 140 are bonded to each other by welding or adhesion, the vacuum state of the accommodating space 160 in which the core material 110 is accommodated may be maintained even though the envelopes 130 and 140 are damaged in the manufacturing process.

The first envelope 130 and the second envelope 140 may have the same or different thermal conductivities.

When the first envelope 130 and the second envelope 140 have different thermal conductivities, the first envelope 130 having smaller thermal conductivity may be disposed at an outer side of the core material 110 to face an inner surface 13a of the outer case 13. The second envelope 140 having larger thermal conductivity may be disposed at an outer side of the core material 110 to face an outer surface 11a of the inner case 11 and coupled to the first envelope 130 to form the accommodating space 160 in which the core material 110 is accommodated.

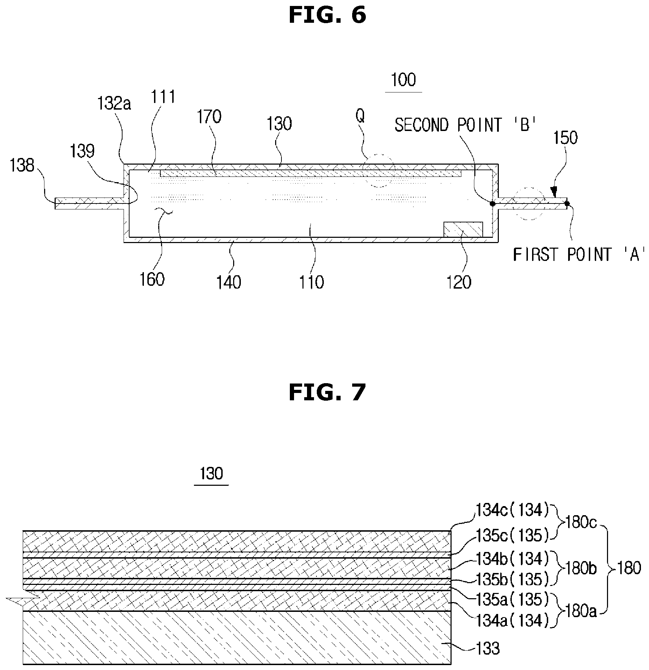

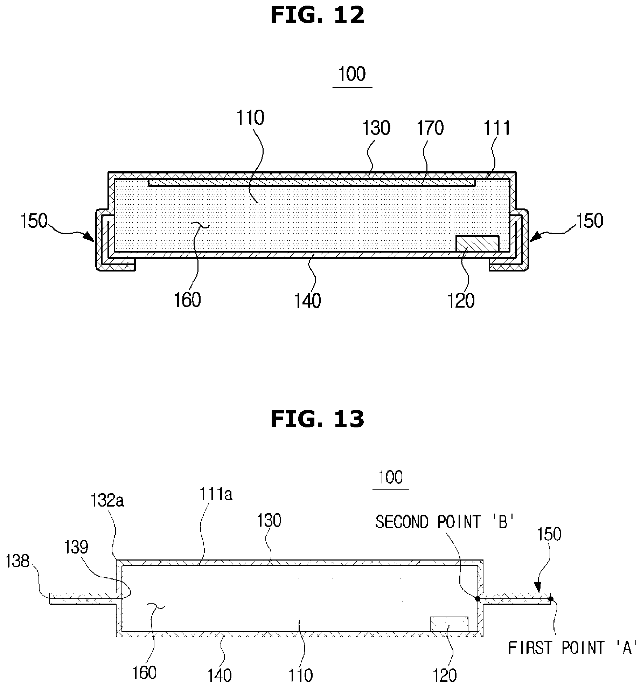

The first envelope 130 may be bonded to the inner surface 13a of the outer case 13. As the first envelope 130 having smaller thermal conductivity is bonded to the inner surface 13a of the outer case 13, heat insulating performance may be improved, and also, an introduction of outside moisture and gas into an inner side of the Vacuum Insulation Panel 100 may be prevented. In addition, as an outer surface of the first envelope 130 facing the inner surface 13a of the outer case 13 is leveled, a bonding to the inner surface 13a of the outer case 13 is convenient. An extension portion 150 (FIGS. 6 and 12) that is formed as the first envelope 130 and the second envelope 140 are coupled to each other is bent toward the inner case 11 such that the first envelope 130 is positioned at an outer side of the second envelope 140, an outer surface of the second envelope 140 may not be leveled.

However, although the first envelope 130 is bonded to the inner surface 13a of the outer case 13, the present disclosure is not limited thereto. For example, the second envelope 140 rather than the first envelope 130 may be bonded to the inner surface 13a of the outer case 13.

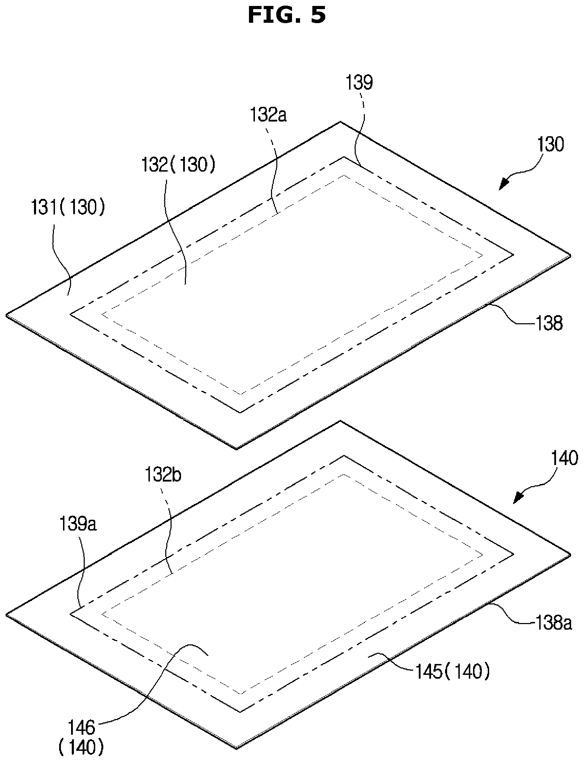

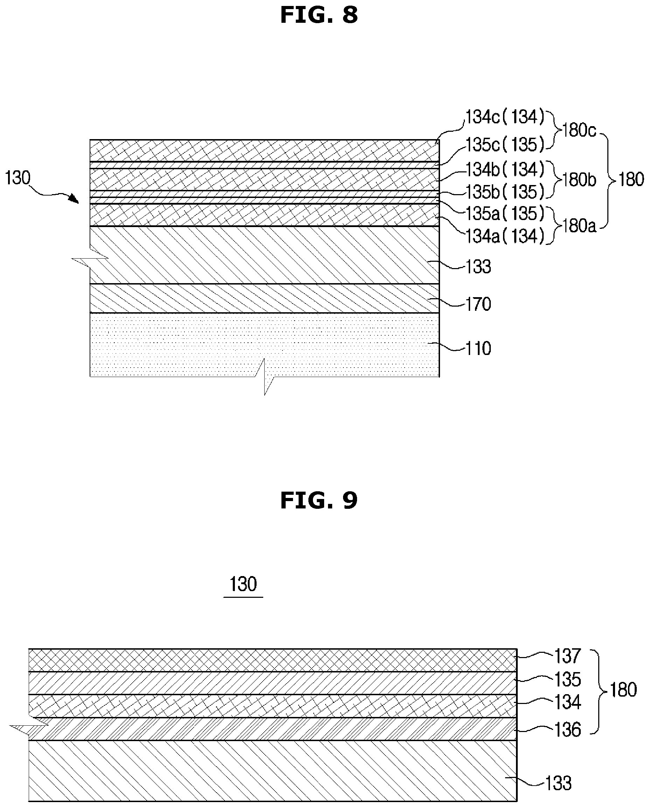

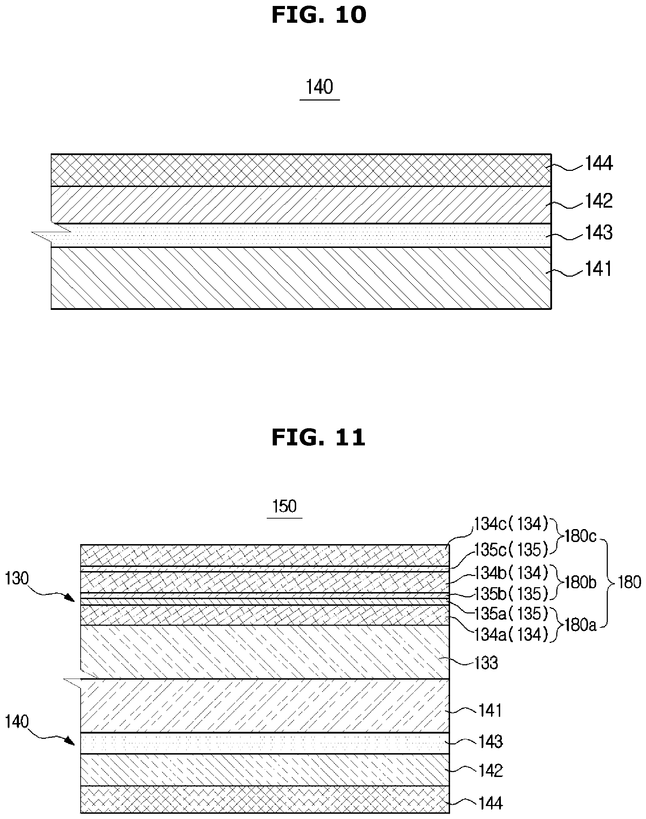

FIG. 5 is a cross-sectional view illustrating a state prior to a first envelope and a second envelope of the vacuum insulating material in accordance with one embodiment of the present disclosure being coupled, FIG. 6 is a cross-sectional view illustrating a state prior to an extension portion of the vacuum insulating material in accordance with one embodiment of the present disclosure being bent, FIG. 7 is an enlarged cross-sectional view illustrating the first envelope of the vacuum insulating material in accordance with one embodiment of the present disclosure, FIG. 8 is an enlarged cross-sectional view illustrating a portion 'Q' of the vacuum insulating material of FIG. 6, FIG. 9 is an enlarged cross-sectional view illustrating a first envelope of a vacuum insulating material in accordance with another embodiment of the present disclosure, FIG. 10 is an enlarged cross-sectional view illustrating a second envelope of the vacuum insulating material in accordance with one embodiment of the present disclosure, FIG. 11 is an enlarged cross-sectional view illustrating an extension portion of the vacuum insulating material in accordance with one embodiment of the present disclosure, and FIG. 12 is a cross-sectional view illustrating a state of the bent extension portion in accordance with one embodiment of the present disclosure.

Referring to FIGS. 5 to 12, a description will be made focusing on a case in which the first envelope 130 and the second envelope 140 have different thermal conductivities. In addition, a case in which the first envelope 130 is an envelope to which penetration of gas and moisture is relatively easy and the second envelope 140 is an envelope to which penetration of gas and moisture is relatively difficult will be described as an example. In addition, a blocking layer 170 includes a block layer. That is, the block layer refers to the blocking layer 170 disposed between the core material 110 and the second envelope 140.

The first envelope 130 may include a metallic deposition envelope, and the second envelope 140 may include an aluminum foil envelope. Hereinafter, for the convenience of descriptions, the first envelope 130 will be referred to as the metallic deposition envelope, and the second envelope 140 will be referred to as the aluminum foil envelope. The metallic deposition envelope includes an aluminum deposit envelope. The aluminum foil envelope is provided with lower penetration rate of moisture and gas, while the Heat Bridge, that is, a phenomenon in which heat flows through an edge of the vacuum insulating material, is occurred, and thus heat insulating performance may be decreased. Meanwhile, the metallic deposition envelope may be able to prevent the Heat Bridge as the metallic layer is thinner when compared to the aluminum foil envelope, while provided with higher penetration rate of moisture and gas, and thus durability may be decreased. Hereinafter, the Vacuum Insulation Panel 100 in accordance with the present disclosure configured to prevent the Heat Bridge by supplementing weaknesses of the metallic deposition envelope and the aluminum foil envelope as the above and having an improved durability will be described.

Hereinafter, an "upper portion" is referred to as a surface facing an outer side of the Vacuum Insulation Panel, and a "lower portion" is referred to as a surface facing an inner side of the Vacuum Insulation Panel, that is, the surface facing the core material of the Vacuum Insulation Panel. With respect to the figures of the drawings that are not shown, FIG. 1 to FIG. 4 will be used as references.

As illustrated in FIG. 5 to FIG. 11, the Vacuum Insulation Panel 100 may include the core material 110, the first envelope 130, and the second envelope 140.

The core material 110 may include Glass Fiber having superior heat insulating performance. Higher heat insulating effect may be obtained as a panel that is woven by use of thinner Glass Fiber is stacked on top of each other to form a structure. In particular, as each Pore Size between the Fiber Glass is smaller, the effect of Radiation, that is, heat insulating performance, may be minimized, and thus higher heat insulating effect may be expected.

The core material 110 may be formed only with Fiber Glass.

The first envelope 130 is disposed at one surface of the core material 110, and the second envelope 140 may be disposed at the other surface of the core material 110 so that the first envelope 130 is coupled to the second envelope 140 to form the accommodating space 160 in which the core material 110 is accommodated. In addition, the first envelope 130 and the second envelope 140 may be formed with different material to each other.

The types of the first envelope 130 and the second envelope 140 may be different from each other.

In addition, the first envelope 130 and the second envelope 140 may be made of different materials from each other.

In addition, the first envelope 130 and the second envelope 140 may be provided with different thickness from each other.

In addition, the first envelope 130 and the second envelope 140 may be provided with different stacking structure from each other. In particular, the first envelope 130 and the second envelope 140 may form different layers, respectively. Even in a case when the layers formed by the first envelope 130 and the second envelope 140 are identical to each other, the arrangements of the layers may be different to each other.

In addition, the first envelope 130 and the second envelope 140 may have different numbers of stacked layers from each other. Even in a case when the types of the first envelope 130 and the second envelope 140 are identical to each other, the number of layers of the first envelope 130 may be different from the number of layers of the second envelope 140.

The first envelope 130 and the second envelope 140 are coupled to each other to form the extension portion 150 that is extended toward an outer side direction of the accommodating space 160. The extension portion 150 may be extendedly formed toward an outer side direction from both side surfaces of the core material 110. The first envelope 130 and the second envelope 140 may be able to maintain the accommodating space 160 in which the core material 110 is accommodated in a vacuum state, as the first envelope 130 and the second envelope 140 are bonded to each other at the extension portion 150.

The first envelope 130 and the second envelope 140 may, on at least a part of the extension portion 150, be bonded to each other by welding or adhesion. Preferably, the first envelope 130 and the second envelope 140 may, on the whole of the extension portion 150, be bonded to each other by welding or adhesion.

The first envelope 130 may include a first domain 131 and a second domain 132.

The first domain 131 may be formed along an edge of the first envelope 130. The second domain 132 may be formed at an inner side of the first domain 131.

The second domain 132 may be provided with the shape of a rectangle but is not limited thereto.

The second domain 132 may include a bent portion 132a that is bent from an edge of the core material 110.

The second envelope 140 may include an edge portion 145 and a central portion 146.

The edge portion 145 may be formed along an edge of the second envelope 140. The central portion 146 may be formed at an inner side of the edge portion 145.

The edge portion 145 may correspond to the first domain 131. The central portion 146 may correspond to the second domain 132. However, the corresponding relationship between the edge portion 145 and the central portion 146 is not limited thereto.

The central portion 146 may be provided with a shape of a rectangle but is not limited thereto.

The central portion 146 may include a bent portion 132b that is bent at an edge of the core material 110. The bent portion 132b of the second envelope 140 may correspond to the bent portion 132a of the first envelope 130 but is not limited thereto.

The second envelope 140 may be bonded to the first domain 131 as to form the accommodating space 160 sealed. In particular, an edge portion 145 of the second envelope 140 is bonded to the first domain 131 to form the accommodating space 160 having the surroundings thereof sealed. The edge portion 145 of the second envelope 140 may be bonded to the first domain 131 by welding or adhesion.

The welding may include heat welding.

The first domain 131 of the first envelope 130 and the edge portion 145 of the second envelope 140 are bonded to each other to form the extension portion 150 that is extended toward an outer side direction of the accommodating space 160.

The first domain 131 may be able to form a boundary 139 with respect to the second domain 132 at a position inwardly spaced apart by a distance of 1cm or above and 2cm or below from an outer side boundary 138 of the first envelope 130. That is, the extension portion 150 may have a width that is 1cm or above and 2cm or below provided inwardly from the accommodating space 160. However, the width of the extension portion 150 is not limited to the above example.

The extension portion 150 may include a section connecting a first point 'A' to a second point 'B'. The first point 'A' may be formed at a position at which an edge of the first envelope 130 is bonded to an edge of the second envelope 140 corresponding to the edge of the first envelope 130. The second point 'B' may be positioned in an inner direction of the accommodating space 160 from the first point 'A' to face the core material 110. In particular, the first point 'A' may be formed at a position at which an outer side boundary 138 of the first domain 131 is bonded to an outer side boundary 138a of the second envelope 140 corresponding to the outer side boundary 138 of the first domain 131. That is, the first point 'A' may be formed at a position at which an outermost end of the first envelope 130 meets an outermost end of the second envelope 140 in an outer side direction of the accommodating space 160.

The second point 'B' may be formed at a position at which a boundary 139 between the first domain 131 and the second domain 132 is bonded to the edge portion 145 of the second envelope 140 corresponding to the boundary 139. That is, the second point 'B' may be formed at a position at which the boundary 139 of the first envelope 130 is bonded to the boundary 139a of the second envelope 140 corresponding to the boundary 139. The boundary 139a of the second envelope 140 may be formed between the edge portion 145 and the central portion 146 to divide the edge portion 145 and the central portion 146. The second point 'B' may face the core material 110 that is accommodated in the accommodating space 160. In other words, the first point 'A' may be formed at an outermost position at which the first envelope 130 is bonded to the second envelope 140 in an outer side direction of the accommodating space 160, and the second point 'B' may be formed at a position at which the extension portion 150 is bonded to the core material 110. The amount of moisture and gas penetrating into the accommodating space 160 may be decreased by having the extension portion 150, which connects the first point 'A' to the second point 'B', bonded by welding or adhesion.

In a process of forming the extension portion 150 of the Vacuum Insulation Panel 100, wrinkles may occur in at least one of the first envelope 130 and the second envelope 140. Accordingly, a bonded portion in which adjacent welding layers 133 of the first envelope 130 are bonded to each other may be formed in the first envelope 130. In addition, a bonded portion in which adjacent sealing layers 141 of the second envelope 140 are bonded to each other may be formed in the second envelope 140.

The bonded portion which may be formed in at least one of the first envelope 130 and the second envelope 140 may decrease the amount of moisture and gas penetrating into the accommodating space 160 in the same manner as that in the extension portion 150 which is bonded by welding or adhesion.

The Vacuum Insulation Panel 100 may further include a blocking layer 170.

The blocking layer 170 may be disposed between at least one of the first envelope 130 and the second envelope 140 and the core material 110 to prevent moisture and gas from penetrating into the accommodating space 160.

Preferably, the blocking layer 170 may be installed on inner surfaces of the envelopes 130 and 140 through which penetration of gas and moisture is relatively easy. That is, the blocking layer 170 may be disposed between the core material 110 and the first envelope 130 as to prevent moisture and gas from penetrating to an inside the accommodating space 160 after passing through the first envelope 130.

The blocking layer 170 is accommodated inside of the accommodating space 160 together with the core material 110 and may be bonded to at least one of the first envelope 130 and the second envelope 140 and form an integral unit with at least one of the first envelope 130 and the second envelope 140.

Preferably, the blocking layer 170 may be bonded to the first envelope 130 and form an integral unit with the first envelope 130.

The blocking layer 170 may be bonded to the second domain 132 of the first envelope 130.

Alternatively, the blocking layer 170 may be bonded to an inner side of the second domain 132 of the first envelope 130. As an example, the blocking layer 170 may be bonded to an inner side of the bent portion 132a of the first envelope 130.

Alternatively, the blocking layer 170 may be bonded to a part of the second domain 132 and the first domain 131. As an example, the blocking layer 170 may be bonded over a part of the second domain 132 and the first domain 131 to include the boundary 139.

When the types of the first envelope 130 and the second envelope 140 are different from each other, the blocking layer 170 may have a width equal to or smaller than the core material 110. As an example, when the first envelope 130 is composed of a metallic deposition envelope and the second envelope 140 is composed of an aluminum foil envelope, the blocking layer 170 may have a width equal to or smaller than the core material 110.

The blocking layer 170 may have a width equal to the core material 110. In particular, the core material 110 may include an upper surface 111 facing the blocking layer 170, and the blocking layer 170 may be provided with the same area as that of the upper surface 111 of the core material 110.

Alternatively, the blocking layer 170 may have a smaller width than the core material 110. In particular, the blocking layer 170 may be provided with a smaller area than the area of the upper surface 111 of the core material 110.

The above is because, due to the characteristic of the blocking layer 170, in a case when the blocking layer 170 is provided with a larger cross-sectional area with respect to the core material 110, the Heat Bridge may occur.

When the types of the first envelope 130 and the second envelope 140 are the same, the blocking layer 170 may be omitted or have a width larger than that of the core material 110.

When each of the first envelope 130 and the second envelope 140 is composed of an aluminum foil envelope regardless of the number of stacking layers, the blocking layer 170 may be omitted. In other words, when both the first envelope 130 and the second envelope 140 are composed of an aluminum foil envelope, the blocking layer 170 may be omitted regardless of whether the first envelope 130 and the second envelope 140 have the same number or different numbers of stacked layers. This is because, in the case of the aluminum foil envelope, penetration of gas and moisture is relatively difficult.

The blocking layer 170 may have a width larger than that of the core material 110. In particular, when each of the first envelope 130 and the second envelope 140 is composed of a metallic deposition envelope regardless of whether the first envelope 130 and the second envelope 140 have the same number or different numbers of stacked layers, the blocking layer 170 may have an area larger than that of the upper surface 111 of the core material 110. That is, when each of the first envelope 130 and the second envelope 140 is composed of a metallic deposition envelope through which penetration of gas and moisture is relatively easy but has low thermal conductivity, the blocking layer 170 may have a width larger than that of the core material 110. At this point, at least one end of the blocking layer 170 toward an outer side direction of the accommodating space 160 may be positioned in the extension portion 150. In particular, the at least one end of the blocking layer 170 toward the outer side direction of the accommodating space 160 may be positioned between the first point 'A' and the second point 'B'.

According to another aspect, the blocking layer 170 may have a width wide enough to cover at least a part of a side surface of the core material as well as the upper surface 111 of the core material 110. As an example, when the first envelope 130 is composed of a metallic deposition envelope and the second envelope 140 is composed of an aluminum foil envelope, the blocking layer 170 may be disposed between the first envelope 130 through which penetration of gas and moisture is relatively easy and the core material 110. The blocking layer 170 may be welded or adhered to the first envelope 130. In addition, the blocking layer 170 may be bent together with the first envelope 130 and extended to the extension portion 150. In particular, at least a part of the blocking layer 170 toward an outer side direction of the accommodating space 160 may be positioned between the first point 'A' and the second point 'B'. At this point, the blocking layer 170 may more effectively block penetrating gas and moisture toward a side surface or an edge of the core material 110 as well as penetrating gas and moisture toward the upper surface 111 of the core material 110, and therefore the heat insulating performance of the Vacuum Insulation Panel 100 may be improved.

The blocking layer 170 may be bonded to at least one of the first envelope 130 and the second envelope 140 by welding or adhesion.

Preferably, the blocking layer 170 may be bonded to the first envelope 130 by welding or adhesion.

Welding may include heat welding configured to apply heat.

The blocking layer 170 may be inserted into an inside the accommodating space 160 together with the core material 110 as to face the first envelope 130. The blocking layer 170 inserted into an inside the accommodating space 160 may be welded or adhered to the first envelope 130 by a heat processing that is applied from an outside the Vacuum Insulation Panel 100.

In a case when the blocking layer 170 is bonded to an inner surface or an outer surface of the first envelope 130 by use of a separate adhesive, a vacuum state of the accommodating space 160 may be broken as the gas that is generated from the adhesive is penetrated into an inside the accommodating space 160, or great expense may be generated if manufactured.

The blocking layer 170 may include at least one of a metal foil, an inorganic deposition film, and a polymer resin.

The blocking layer 170 may be provided with a width that is identical or less than that of the second domain 132.

The blocking layer 170 may include a base layer, that is, a first layer (not shown), that is bonded to the second domain 132 of the first envelope 130. The base layer may be bonded to the second domain 132 by welding or adhesion.

The blocking layer 170 may further include a second layer, that is, at least one of at least one metallic layer (not shown), and inorganic deposition layer (not shown). The inorganic deposition layer is referred to as a layer at which an inorganic substance is deposited.

Hereinafter, the base layer may be used under an identical definition with respect to a first layer, and a second layer may be used under an identical definition with respect to at least one of at least one metallic layer and inorganic deposition layer.

The at least one of at least one metallic layer and inorganic deposition layer may be stacked at the base layer toward the core material 110. That is, the at least one of at least one metallic layer and inorganic deposition layer may be disposed at a lower portion of the base layer.

In particular, the blocking layer 170 may be provided with a structure in which the base layer, which is bonded to the second domain 132, and the at least one metallic layer, which is positioned at a lower portion of the base layer toward the core material 110, are stacked.

Alternatively, the blocking layer 170 may be provided with a structure in which the base layer, which is bonded to the second domain 132, and the inorganic deposition layer, which is positioned at a lower portion of the base layer toward the core material 110, are stacked.

Alternatively, the blocking layer 170 may be provided with a structure in which the base layer, which is bonded to the second domain 132, and the at least one metallic layer and the inorganic deposition layer, which are positioned at a lower portion of the base layer toward the core material 110, are stacked. The at least one metallic layer and the inorganic deposition layer may be stacked in various order.

The blocking layer 170 may include only the at least one metallic layer. In a case when the blocking layer 170 is composed of only the at least one metallic layer, the at least one metallic layer faces the second domain 132 and bonded to the second domain 132.

The first envelope 130 may include the welding layer 133 and at least one barrier layer 180.

The welding layer 133 may face the accommodating space 160 toward an inner side direction of the core material 110. The welding layer 133 may include at least one of LLDPE (Linear Low-Density Polyethylene), LDPE (Low Density Polyethylene), HDPE (High Density Polyethylene), and CPP (Casting Polypropylene), each provided with superior sealing performance. The welding layer 133 may preferably include at least one of LLDPE (Linear Low-Density Polyethylene) or LDPE (Low Density Polyethylene), as the LLDPE (Linear Low-Density Polyethylene) or the LDPE (Low Density Polyethylene) may be able to easily adhered to by the heat that may be applied during a process of bonding the blocking layer 170 to the second domain 132. Being able to be easily adhered to is referred to an adhering at an optimal temperature at which the components of other envelopes are not hindered.

The welding layer 133 may be formed in the shape of film.

The at least one barrier layer 180 may be stacked at an upper portion of the welding layer 133, and may include a substrate layer 134 and a deposition layer 135.

The substrate layer 134 may include at least one of PET (Polyethylene Phthalate), VMPET (Vacuum Metalized Polyethylene Phthalate), EVOH (Ethylene Vinyl Alcohol), and Nylon.

The deposition layer 135 may be provided at the substrate layer 134 as to block gas and moisture being introduced toward the core material 110.

The deposition layer 135 may be formed by physical deposition such as Evaporating, Sputtering, and Aerosol deposition, or by chemical deposition such as Chemical Vapor Deposition (CVD).

The deposition layer 135 may include at least one of Al, SiO₂, and Al₂O₃. That is, the at least one of Al, SiO₂, and Al₂O₃ may be deposited at the deposition layer 135.

The deposition layer 135 may include various types of chemical oxides, and is not limited to Al₂O₃.

The at least one barrier layer 180 may include a first barrier layer 180a, a second barrier layer 180b, and a third barrier layer 180c. In the case as the above, the first barrier layer 180a positioned at an upper portion of the welding layer 133 as to face the welding layer 133 may include a first substrate layer 134a surrounding the welding layer 133 and a first deposition layer 135a disposed at an upper portion of the first substrate layer 134a.

The second barrier layer 180b positioned at an upper portion of the first barrier layer 180a as to face the first barrier layer 180a may include a second substrate layer 134b positioned at an upper side of the first deposition layer 135a and a second deposition layer 135b positioned between the first deposition layer 135a and the second substrate layer 134b. That is, the second barrier layer 180b may be stacked at an upper portion of the first barrier layer 180a so that the first deposition layer 135a and the second deposition layer 135b are faced to each other.

The third barrier layer 180c positioned at an upper portion of the second barrier layer 180b may include a third deposition layer 135c provided at an upper portion of the second substrate layer 134b and a third substrate layer 134c positioned at an upper portion of the third deposition layer 135c.

The second barrier layer 180b is stacked at an upper portion of the first barrier layer 180a such that the first deposition layer 135a is faced with respect to the second deposition layer 135b, as to prevent cracking from being occurred at the first deposition layer 135a. More in detail, in a case when the first deposition layer 135a is disposed at the welding layer 133, due to the characteristic of the welding layer 133, a crack may be easily occurred at the first deposition layer 135a. In a case when a crack is occurred at the first deposition layer 135a, gas and moisture may be introduced to an inside the Vacuum Insulation Panel 100 through the crack, and thus insulation performance of the Vacuum Insulation Panel 100 may be decreased. Thus, the second barrier layer 180b is preferred to be stacked at an upper portion of the first barrier layer 180a so that the first deposition layer 135a and the second deposition layer 135b are faced with respect to each other.

The at least one barrier layer 180 may be provided with a structure in which the substrate layer 134 and the deposition layer 135, which is positioned at the substrate layer 134, are positioned while facing with respect to each other.

The at least one barrier layer 180 is not limited to the first barrier layer 180a, the second barrier layer 180b, and the third barrier layer 180c.

The at least one barrier layer 180 may further include a penetration preventing layer 136.

The penetration preventing layer 136 may be provided between the welding layer 133 and the substrate layer 134.

The penetration preventing layer 136 may further include at least one of EVOH (Ethylene Vinyl Alcohol) and VM-EVOH (Vacuum Metalized-Ethylene Vinyl Alcohol).

The at least one barrier layer 180 may further include a protective layer 137.

The protective layer 137 may be disposed at an outermost skin of the first envelope 130 toward an outer side direction of the core material 110.

The protective layer 137 is configured to perform a role to protect a surface or the core material 110 at an inside the Vacuum Insulation Panel 100 from an outside impact by absorbing or scattering the outside impact. Thus, the protective layer 137 is preferred to be formed with material having superior impact resistance.

The protective layer 137 may include at least one of PET (Polyethylene Phthalate), OPP (Oriented Polypropylene), Nylon, and Oriented Nylon.

The blocking layer 170 may be faced with the welding layer 133 of the first envelope 130, and may be bonded to the welding layer 133. More in detail, the blocking layer 170 may be bonded to the welding layer 133 that corresponds to the second domain 132 of the first envelope 130.

The base layer of the blocking layer 170 may be bonded to the welding layer 133 of the first envelope 130 by welding or adhesion.

The second skin layer 140 may be able to surround a lower portion of the core material 110.

The second skin layer 140 may include a sealing layer 141, an inner layer 142, a preventive layer 143, and a cover layer 144.

The sealing layer 141 is bonded to a surface of the core material 110 as to surround the core material 110 and the blocking layer 170, together with the welding layer 133 of the first envelope 130. The sealing layer 141 may include at least one of LLDPE (Linear Low-Density Polyethylene), LDPE (Low Density Polyethylene), HDPE (High Density Polyethylene) and CPP (Casting Polypropylene), each provided with superior sealing performance.

The sealing layer 141 may be formed in the shape of film.

The inner layer 142 may be positioned at an upper side of the sealing layer 141. The inner layer 142 may include at least one of PET (Polyethylene Phthalate), VMPET (Vacuum Metalized Polyethylene Phthalate), EVOH (Ethylene Vinyl Alcohol), and Nylon.

The preventive layer 143 may be provided between the sealing layer 141 and the inner layer 142, and may include AI.

The cover layer 144 is configured to perform a role to protect a surface or the core material 100 at an inside the Vacuum Insulation Panel 100 from an outside impact by absorbing or scattering the outside impact. Thus, the cover layer 144 is preferred to be formed with material having superior impact resistance.

The cover layer 144 may include at least one of PET (Polyethylene Phthalate), VMPET (Vacuum Metalized Polyethylene Phthalate), EVOH (Ethylene Vinyl Alcohol), and Nylon.

The welding layer 133 corresponding to the first domain 131 of the first envelope 130 may be able to form the extension portion 150 by being coupled to the sealing layer 141 that corresponds to the edge portion 145 of the second envelope 140.

**[Table 1]**

| Embodiments | Structure of First Envelope | Extension portion bonded? | Effective Thermal Conductivity | Core Thermal Conductivity (Initial) | Core Thermal Conductivity (30 Days after in room temperature) |
|---|---|---|---|---|---|
| Embodiment 1 | Deposition Layer (3 Layers) + Blocking Layer | O | 3.7 | 2.04 | 2.08 |
| Embodiment 2 | Deposition Layer (3 Layers) | X | 3.8 | 2.01 | 2.30 |

[TABLE 1] shows thermal conductivity of the Vacuum Insulation Panel depending on whether the extension portion is bonded and the presence of the blocking layer.

As shown on [TABLE 1], the Vacuum Insulation Panels 100 may be provided with different thermal conductivity with respect to each other depending on whether the blocking layer 170 is present and whether the extension portion 150 is bonded.

The effective thermal conductivity is referred to as a value that factors in the thermal conductivity at a central unit of the Vacuum Insulation Panel 100 as well as the thermal conductivity at the edge portion of the Vacuum Insulation Panel 100, and is provided with the unit of "mW/mK." The smaller the effective thermal conductivity is, the superior the heat insulating performance of the Vacuum Insulation Panel is.

The core thermal conductivity is referred to as a value of the thermal conductivity measured at the central portion of the Vacuum Insulation Panel 100, and is provided with the unit of "mW/mK." When the initial value of the core thermal conductivity and the value of the core thermal conductivity after 30 days are compared, the reliability of the Vacuum Insulation Panel 100 may be estimated. The smaller the value difference between the initial value of the core thermal conductivity and the value of the core thermal conductivity after 30 days is, the superior the reliability and the heat insulating performance of the Vacuum Insulation Panel 100 is.

The Vacuum Insulation Panel 100 of the embodiment 1 is provided with the first envelope 130 structured in 3 layers having AI, the deposition layer 135, and the blocking layer 170, and the Vacuum Insulation Panel 100 of the embodiment 2 is provided with the first envelope 130 structured in 3 layers having AI and the deposition layer 135 while the blocking layer 170 is omitted.

The Vacuum Insulation Panel 100 of the embodiment 1 is provided with the bonded extension portion 150, and the Vacuum Insulation Panel 100 of the embodiment 2 is provided with the extension portion 150 that is not bonded.

As shown on the [TABLE 1], the Vacuum Insulation Panel 100 of the embodiment 1 is provided with the smaller effective thermal conductivity with compared to the Vacuum Insulation Panel 100 of the embodiment 2. With respect to the difference of the core thermal conductivity according to elapsed time, the core thermal conductivity of the Vacuum Insulation Panel 100 of the embodiment 1 is further smaller than the core thermal conductivity of the Vacuum Insulation Panel 100 of the embodiment 2, and thus, in a case when the extension portion 150 is bonded and the blocking layer 170 is included, the heat insulating performance and the reliability of the Vacuum Insulation Panel 100 are improved.

The Vacuum Insulation Panel 100 may further include an absorption material 120.

The absorption material 120 is provided at an inside the core material 110, and may absorb at least one of gas or moisture that is introduced to an inside the core material 110 as to maintain a state of vacuum of the core material 110. The absorption material 120 may be in the form of powers, or may be structured to be provided with a predetermined block or a rectangular shape. In addition, the absorption material 120 may be coated on an inner surface of the at least one of the first envelope 130 or the second envelope 140 or on a surface of the core material 110, or may be inserted into an inside the core material 110.

The absorption material 120 may include Ca0, Ba0, and Mg0.

The absorption material 120 may further include a catalyst.

A manufacturing method of the Vacuum Insulation Panel 100 may include a forming of the shape of an envelope by coupling the first envelope 130 and the second envelope 140 into each other such that one side of the accommodating space 160 is open, an inserting of the core material 110 into an inside the accommodating space 160, and a forming of the sealed accommodating space 160 by coupling one sides of the first envelope 130 and the second envelope 140. More in detail, the manufacturing method of the Vacuum Insulation Panel 100 may include a coupling of an outermost end of the edge portion 145 of the first domain 131 of the first envelope 130 with respect to an outermost end of the edge portion 245 of the second envelope 140 such that one side of the accommodating space 160 is open, an inserting of the core material 100 into an inside the accommodating space 160, and forming of the sealed accommodating space 160, that is, being in a vacuum state by coupling the open one side of the first domain 131 of the first envelope 130 with respect to the open one side of the edge portion 145 of the second envelope 140. The blocking layer 170 may be inserted into the accommodating space 160 to face at least one of the first envelope 130 and the second envelope 140 in a process of inserting the core material 110 into the accommodating space 160. As the edge portions 145 of the first domain 131 of the first envelope 130 and of the second envelope 140 are coupled with respect to each other, the extension portion 150 facing an outer side of the accommodating space 160 may be formed.

The manufacturing method of the Vacuum Insulation Panel 100 may further include an applying of heat from an outside the Vacuum Insulation Panel 100. The blocking layer 170 is provided to be welded or adhered to the welding layer 133 of the first envelope 130 by applying heat at the Vacuum Insulation Panel 100, and an introduction of moisture and gas into an inside the accommodating space 160 through the first envelope 130 may further be effectively prevented by having the welding layer 133 of the first envelope 130 and the sealing layer 141 of the second envelope 140, both of which are configured to form the extension portion 150, welded or adhered.

Pressurization other than applying heat at the Vacuum Insulation Panel 100 may be proceeded. As an example, the Vacuum Insulation Panel 100 may be pressurized under atmospheric pressure.

FIG. 12 is a cross-sectional view illustrating a state of the extension portion in accordance with one embodiment of the present disclosure being bent. FIG. 1 to FIG. 11 will be referred with respect to the figures of the drawing that are not shown.

As illustrated on FIG. 12, the extension portion 150 of the Vacuum Insulation Panel 100 may be bent.

The extension portion 150 may be bent such that the second envelope 140 is positioned between the core material 110 and the first envelope 130. That is, the extension portion 150 maybe bent such that the first envelope 130 having smaller thermal conductivity may be positioned at an outer side of the second envelope 140 having greater thermal conductivity. As described earlier, the Vacuum Insulation Panel 100 may be disposed between the inner case 11 and the outer case 13 such that the first envelope 130 is bonded to an inner surface of the outer case 13, and the heal insulating performance of the Vacuum Insulation Panel 100 may be improved by bending the extension portion 150 such that the second envelope 140 having greater thermal conductivity may be farther from the outer case 13.

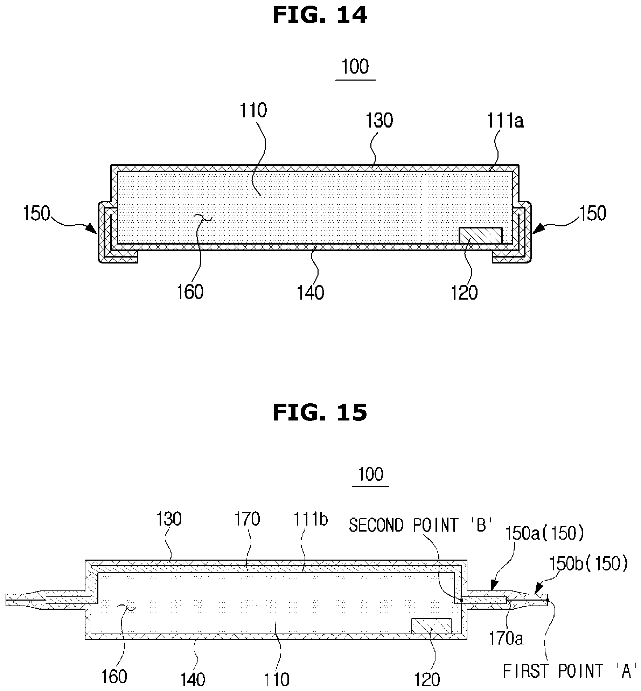

FIG. 13 is a cross-sectional view illustrating a state prior to bending of the extension portion of the vacuum insulating material in accordance with another embodiment of the present disclosure, and FIG. 14 is a cross-sectional view illustrating a state of the bent extension portion in accordance with another embodiment of the present disclosure. Hereinafter, reference numerals which are not shown refer to FIGS. 1 to 12. In addition, repeated descriptions with respect to FIGS. 1 to 12 will be omitted. In FIGS. 13 to 15, description will be made focusing on a case in which the first envelope 130 and the second envelope 140 have the same thermal conductivity.

The Vacuum Insulation Panel 100 may include the core material 110 having an upper surface 111a that faces the first envelope 130.

The Vacuum Insulation Panel 100 may further include the first envelope 130 and the second envelope 140 which surround the core material 110.

The first envelope 130 may include at least one of a metallic deposition envelope and an aluminum foil envelope.

The second envelope 140 may include at least one of a metallic deposition envelope and an aluminum foil envelope.

The first envelope 130 and the second envelope 140 may be coupled to each other to form the extension portion 150 that is extended toward an outer side direction of the accommodating space 160. The extension portion 150 may be formed to extend in the outer side direction of the accommodating space 160 from both side surfaces of the core material 110. The first envelope 130 and the second envelope 140 may be bonded to each other at the extension portion 150 to maintain the accommodating space 160 in which the core material 110 is accommodated in a vacuum state.

The first envelope 130 and the second envelope 140 may be bonded to each other by welding or adhesion on at least a part of the extension portion 150. Preferably, the first envelope 130 and the second envelope 140 may, on the entire extension portion 150, be bonded to each other by welding or adhesion.

The extension portion 150 may include a section connecting a first point 'A' to a second point 'B'. The first point 'A' may be formed at a position at which an edge of the first envelope 130 is bonded to an edge of the second envelope 140 corresponding to the edge of the first envelope 130. The second point 'B' may be positioned toward an inner direction of the accommodating space 160 from the first point 'A' to face the core material 110. In other words, the first point 'A' may be formed at an outermost position at which the first envelope 130 is bonded to the second envelope 140 in an outer side direction of the accommodating space 160, and the second point 'B' may be formed at a position at which the extension portion 150 is bonded to the core material 110. The amount of moisture and gas penetrating into the accommodating space 160 may be decreased by having the extension portion 150, which connects the first point 'A' to the second point 'B', bonded by welding or adhesion.

Each of the first envelope 130 and the second envelope 140 may have a coupling layer that faces the accommodating space 160, in an inner side direction of the core material 110. The coupling layer may be used as meaning including at least one of a welding layer 133 and a sealing layer 141. The coupling layers of the first envelope 130 and the second envelope 140 may be bonded to each other by welding or adhesion.

The coupling layer may include at least one of LLDPE (Linear Low-Density Polyethylene), LDPE (Low Density Polyethylene), HDPE (High Density Polyethylene), and CPP (Casting Polypropylene), each provided with superior sealing performance. Preferably, the coupling layer may include at least one of LLDPE (Linear Low-Density Polyethylene) and LDPE (Low Density Polyethylene)

The coupling layer of the first envelope 130 and the coupling layer of the second envelope 140 may be bonded to each other under at least one condition of heating and pressurization. The heating and pressurization conditions may vary according to the physical properties and chemical properties of the bonding layer. As an example, the coupling layer of the first envelope 130 and the coupling layer of the second envelope 140 may be bonded to each other by welding or adhesion under the atmospheric pressure condition.

Any one of the first envelope 130 and the second envelope 140 may be bonded along an edge of the other one of the first envelope 130 and the second envelope 140 by welding or adhesion.

When both the first envelope 130 and the second envelope 140 are metallic deposition envelopes, the degree of penetration of gas and moisture can be decreased by having the first envelope 130 and the second envelope 140 be bonded to each other by welding or adhesion. The reason for the decrease in penetration of moisture or gas is the same as a case in which both the first envelope 130 and the second envelope 140 are aluminum foil envelopes.

However, when both the first envelope 130 and the second envelope 140 are metallic deposition envelopes, the degree of penetration of gas and moisture can be further decreased by disposing a blocking layer 170. The disposition of the block layer 170 will be described later.

As illustrated in FIG. 14, the extension portion 150 of the Vacuum Insulation Panel 100 may be bent.

In a process of bending the extension portion 150 of the Vacuum Insulation Panel 100, cracks may occur in at least one of the first envelope 130 and the second envelope 140. Gas or moisture may be introduced inside the Vacuum Insulation Panel 100 through the cracks, and this can have a significant effect on the decrease in insulation performance and durability of the Vacuum Insulation Panel 100. The decrease in insulation performance and durability of the Vacuum Insulation Panel 100 due to the occurrence of the cracks may be prevented by bonding, preferably, welding the first envelope 130 and the second envelope 140 to each other. That is, the gas or moisture introduced through the cracks should pass through a portion at which the first envelope 130 and the second envelope 140 are bonded or welded to each other, and thus it is difficult for the gas or moisture to reach the core material 110.

In a process of forming the extension portion 150 of the Vacuum Insulation Panel 100 or bending the extension portion 150 of the Vacuum Insulation Panel 100, wrinkles may occur in at least one of the first envelope 130 and the second envelope 140. Accordingly, a bonded portion (welding portion) in which adjacent welding layers 133 of the first envelope 130 are bonded to each other, preferably, welded to each other, may be formed in the first envelope 130. In addition, a bonded portion (welding portion) in which adjacent sealing layers 141 of the second envelope 140 are bonded to each other, preferably, welded to each other, may be formed in the second envelope 140. The bonded portion (welding portion) in which the welding layers 133 of the first envelope 130 are bonded to each other, preferably, welded to each other, and the bonded portion (welding portion) in which the sealing layers 141 of the second envelope 140 are bonded to each other, preferably, welded to each other, may prevent a decrease in insulation performance and durability of the Vacuum Insulation Panel 100 due to the occurrence of the cracks.

FIG. 15 is a cross-sectional view illustrating a state prior to bending of the extension portion of the vacuum insulating material in accordance with still another embodiment of the present disclosure. Hereinafter, reference numerals which are not shown refer to FIGS. 1 to 14. In addition, repeated descriptions with respect to FIGS. 1 to 14 will be omitted.

As illustrated in FIG. 15, the Vacuum Insulation Panel 100 may further include the blocking layer 170, which is disposed between the core material 110 and at least one of the first envelope 130 and the second envelope 140, to prevent moisture and gas from passing through at least one of the first envelope 130 and the second envelope 140 and penetrating into the accommodating space 160.

The blocking layer 170 may be selectively disposed.

When both the first envelope 130 and the second envelope 140 are metallic deposition envelopes, the blocking layer 170 may be disposed between the core material 110 and at least one of the first envelope 130 and the second envelope 140.

When both the first envelope 130 and the second envelope 140 are aluminum foil envelopes, the blocking layer 170 may be omitted.

The blocking layer 170 may be bonded to at least one of the first envelope 130 and the second envelope 140 by welding or adhesion to be integrally formed with at least one of the first envelope 130 and the second envelope 140.

The blocking layer 170 may have a width smaller than that of at least one of the first envelope 130 and the second envelope 140.

When the first envelope 130 and the second envelope 140 have the same thermal conductivity, preferably, when both the first envelope 130 and the second envelope 140 are metallic deposition envelopes, the blocking layer 170 may have a width larger than the core material 110. In particular, the core material 110 may include an upper surface 111b that faces the blocking layer 170, and the blocking layer 170 may have an area larger than that of the upper surface 111b of the core material 110.

The extension portion 150 may include the blocking layer 170. At least one end 170a of the blocking layer 170 that is extended in an outer side direction of the accommodating space 160 may be positioned between the first point 'A' and the second point 'B' of the extension portion 150.

The extension portion 150 may include an inner side portion 150a in which the blocking layer 170 is disposed and an outer side portion 150b that is positioned in an outer side of the inner side portion 150a in an outer side direction of the accommodating space 160.

The blocking layer 170 may be disposed between the first envelope 130 and the second envelope 140 in the inner side portion 150a. In particular, the blocking layer 170 may be disposed between the welding layer 133 of the first envelope 130 and the sealing layer 141 of the second envelope 140 in the inner side portion 150a.

The blocking layer 170 may be bonded to at least one of the first envelope 130 and the second envelope 140 by welding or adhesion in the inner side portion 150a. In particular, the blocking layer 170 may be bonded to at least one of the welding layer 133 of the first envelope 130 and the sealing layer 141 of the second envelope 140 by welding or adhesion in the inner side portion 150a.

The first envelope 130 and the second envelope 140 may be bonded to each other by welding or adhesion in the outer side portion 150b. In particular, the welding layer 133 of the first envelope 130 and the sealing layer 141 of the second envelope 140 may be bonded to each other by welding or adhesion in the outer side portion 150b.

The blocking layer 170 may be bent together with at least one of the first envelope 130 and the second envelope 140.

The Vacuum Insulation Panel 100 may be used in various products, in addition to refrigerators, that are needed to be provided with heat insulation.

## Claims

1. A vacuum heat insulating material, comprising:
a core material (110);
a first envelope (130) disposed at an outer side of the core material (110);
a blocking layer (170) disposed between the core material (110) and the first envelope (130) and bonded to the first envelope (130) so as to be integrally formed with the first envelope (130); and
a second envelope (140) having a thermal conductivity greater than a thermal conductivity of the first envelope (130) and coupled to the first envelope (130) to form an accommodating space (160) in which the core material (110) and the blocking layer (170) are accommodated,
wherein the blocking layer (170) is configured to prevent moisture and gas from penetrating into the accommodating space (160); and
wherein the first envelope (130) and the second envelope (140) are bonded to each other by welding or adhesion to form an extension portion (150) extended toward an outer side of the accommodating space (160).

2. The vacuum heat insulating material of claim 1, wherein:
the extension portion (150) is bent such that the first envelope (130) is positioned at an outer side of the second envelope (140).

3. The vacuum heat insulating material of claim 1, wherein:
the first envelope (130) includes a welding layer (133) to which the blocking layer (170) is bonded, and
a barrier layer (180) stacked at an outer side of the welding layer (133).

4. The vacuum heat insulating material of claim 3, wherein:
the second envelope (140) includes a sealing layer (141) surrounding the core material (110), and
the welding layer (133) and the sealing layer (141) are bonded to each other to form the extension portion (150).

5. The vacuum heat insulating material of claim 4, wherein:
the welding layer (133) and the sealing layer (141) each include at least one of LLDPE (Linear Low-Density Polyethylene) and LDPE (Low Density Polyethylene).

6. The vacuum heat insulating material of claim 3, wherein:
the barrier layer (180) is provided in a plurality of layers,
the plurality of barrier layers include a substrate layer (134) and a deposition layer (135) disposed facing the substrate layer (134) so as to block gas and moisture being introduced toward the core material (110), and
the deposition layer (135) includes at least one of Al, SiO2, and Al₂O₃.

7. The vacuum heat insulating material of claim 6, wherein:
the plurality of barrier layers further include a penetration preventing layer (136) provided between the welding layer (133) and the substrate layer (134), and
the penetration preventing layer (136) includes at least one of EVOH (Ethylene Vinyl Alcohol) and VM-EVOH (Vacuum Metalized-Ethylene Vinyl Alcohol).

8. The vacuum heat insulating material of claim 7, wherein:
the plurality of barrier layers further include a protective layer (137) provided on the deposition layer (135) so as to absorb an outside impact, and
the protective layer (137) includes at least one of PET (Polyethylene Terephthalate) and Nylon.

9. The vacuum heat insulating material of claim 3, wherein:
the blocking layer (170) includes a first layer bonded to the welding layer (133) by welding or adhesion, and a second layer stacked on the first layer toward an inner side of the core material (110), and
the second layer includes at least one of an inorganic deposition layer and a plurality of metallic layers.

10. The vacuum heat insulating material of claim 1, wherein:
the first envelope (130) includes a welding layer (133) facing the accommodating space (160) in an inner side direction of the core material (110), and a plurality of barrier layers (180) disposed on the welding layer (133) in an outer side direction of the core material (110),
the plurality of barrier layers (180) include a first barrier layer (180a) positioned at an outer side of the welding layer (133), and a second barrier layer (180b) positioned at an outer side of the first barrier layer (180a),
the first barrier layer (180a) includes a first substrate layer (134a) surrounding the welding layer (133), and a first deposition layer (135a) positioned at an outer side of the first substrate layer (134a),
the second barrier layer (180b) includes a second deposition layer (135b) facing the first deposition layer (135a), and a second substrate layer (134b) positioned at an outer side of the second deposition layer (135b), and
the blocking layer (170) is welded or adhered to the first envelope (130) to be integrally formed with the first envelope (130).

11. The vacuum heat insulating material of claim 10, wherein:
the first envelope (130) and the second envelope (140) have different thermal conductivities from each other.

12. The vacuum heat insulating material of claim 10, wherein:
the first envelope (130) has a lower thermal conductivity than that of the second envelope (140).

13. The vacuum heat insulating material of claim 10, wherein:
the first envelope (130) includes an aluminium deposition envelope, and the second envelope (140) includes an aluminium foil envelope.

14. The vacuum heat insulating material of claim 10, further comprising:
a blocking layer (170) disposed between the core material (110) and the second envelope (140),
wherein the blocking layer (170) is welded or adhered to the second envelope (140) to form an integral unit with the second envelope (140).

15. The vacuum heat insulating material of claim 14, wherein:
the first envelope (130) and the second envelope (140) each include an aluminium deposition envelope.

## Patentansprüche

1. Vakuumwärmeisoliermaterial, umfassend:
ein Kernmaterial (110);
eine erste Hülle (130), die an einer Außenseite des Kernmaterials (110) angeordnet ist;
eine Blockierschicht (170), die zwischen dem Kernmaterial (110) und der ersten Hülle (130) angeordnet und an die erste Hülle (130) gebunden ist, um einstückig mit der ersten Hülle (130) gebildet zu sein; und
eine zweite Hülle (140), die eine Wärmeleitfähigkeit aufweist, die größer als eine Wärmeleitfähigkeit der ersten Hülle (130) ist und an die erste Hülle (130) gekoppelt ist, um einen Aufnahmeraum (160) zu bilden, in dem das Kernmaterial (110) und die Blockierschicht (170) untergebracht sind,
wobei die Blockierschicht (170) konfiguriert ist, um zu verhindern, dass Feuchtigkeit und Gas in den Aufnahmeraum (160) eindringen; und
wobei die erste Hülle (130) und die zweite Hülle (140) durch Schweißen oder Kleben aneinander gebunden sind, um einen Erstreckungsabschnitt (150) zu bilden, der sich zu einer Außenseite des Aufnahmeraums (160) erstreckt.

2. Vakuumwärmeisoliermaterial nach Anspruch 1, wobei:
der Erstreckungsabschnitt (150) gebogen ist, sodass die erste Hülle (130) an einer Außenseite der zweiten Hülle (140) positioniert ist.

3. Vakuumwärmeisoliermaterial nach Anspruch 1, wobei:
die erste Hülle (130) eine Schweißschicht (133) beinhaltet, an welche die Blockierschicht (170) gebunden ist, und
eine Barriereschicht (180) an einer Außenseite der Schweißschicht (133) gestapelt ist.

4. Vakuumwärmeisoliermaterial nach Anspruch 3, wobei:
die zweite Hülle (140) eine Abdichtungsschicht (141) beinhaltet, die das Kernmaterial (110) umgibt, und
die Schweißschicht (133) und die Abdichtungsschicht (141) aneinander gebunden sind, um den Erstreckungsabschnitt (150) zu bilden.

5. Vakuumwärmeisoliermaterial nach Anspruch 4, wobei:
die Schweißschicht (133) und die Abdichtungsschicht (141) jeweils zumindest eines von LLDPE (lineares Polyethylen niedriger Dichte) und LDPE (Polyethylen niedriger Dichte) beinhalten.

6. Vakuumwärmeisoliermaterial nach Anspruch 3, wobei:
die Barriereschicht (180) in einer Vielzahl von Schichten bereitgestellt ist,
die Vielzahl von Barriereschichten eine Substratschicht (134) und eine Abscheidungsschicht (135) beinhaltet, die der Substratschicht (134) zugewandt angeordnet ist, um Gas und Feuchtigkeit zu blockieren, die zu dem Kernmaterial (110) eingeführt werden, und
die Abscheidungsschicht (135) zumindest eines von Al, Si02 und Al2O3 beinhaltet.

7. Vakuumwärmeisoliermaterial nach Anspruch 6, wobei:
die Vielzahl von Barriereschichten ferner eine Penetrationsverhinderungsschicht (136) beinhaltet, die zwischen der Schweißschicht (133) und der Substratschicht (134) bereitgestellt ist, und
die Penetrationsverhinderungsschicht (136) zumindest eines von EVOH (Ethylenvinylalkohol) und VM-EVOH (vakuummetallisiertem Ethylenvinylalkohol) beinhaltet.

8. Vakuumwärmeisoliermaterial nach Anspruch 7, wobei:
die Vielzahl von Barriereschichten ferner eine Schutzschicht (137) beinhaltet, die an der Abscheidungsschicht (135) bereitgestellt ist, um einen Stoß von außen zu absorbieren, und
die Schutzschicht (137) zumindest eines von PET (Polyethylenterephthalat) und Nylon beinhaltet.

9. Vakuumwärmeisoliermaterial nach Anspruch 3, wobei:
die Blockierschicht (170) eine erste Schicht, die durch Schweißen oder Kleben an die Schweißschicht (133) gebunden ist, und eine zweite Schicht beinhaltet, die auf die erste Schicht zu einer Innenseite des Kernmaterials (110) gestapelt ist, und
die zweite Schicht zumindest eines von einer anorganischen Abscheidungsschicht und einer Vielzahl von metallischen Schichten beinhaltet.

10. Vakuumwärmeisoliermaterial nach Anspruch 1, wobei:
die erste Hülle (130) eine Schweißschicht (133), die dem Aufnahmeraum (160) in einer Innenseitenrichtung des Kernmaterials (110) zugewandt ist, und eine Vielzahl von Barriereschichten (180) beinhaltet, die an der Schweißschicht (133) in einer Außenseitenrichtung des Kernmaterials (110) angeordnet ist,
die Vielzahl von Barriereschichten (180) eine erste Barriereschicht (180a), die an einer Außenseite der Schweißschicht (133) positioniert ist, und eine zweite Barriereschicht (180b) beinhaltet, die an einer Außenseite der ersten Barriereschicht (180a) positioniert ist,
die erste Barriereschicht (180a) eine erste Substratschicht (134a), welche die Schweißschicht (133) umgibt, und eine erste Abscheidungsschicht (135a) beinhaltet, die an einer Außenseite der ersten Substratschicht (134a) positioniert ist,
die zweite Barriereschicht (180b) eine zweite Abscheidungsschicht (135b), die der ersten Abscheidungsschicht (135a) zugewandt ist, und eine zweite Substratschicht (134b) beinhaltet, die an einer Außenseite der zweiten Abscheidungsschicht (135b) positioniert ist, und
die Blockierschicht (170) an die erste Hülle (130) geschweißt oder geklebt ist, um einstückig mit der ersten Hülle (130) gebildet zu sein.

11. Vakuumwärmeisoliermaterial nach Anspruch 10, wobei:
die erste Hülle (130) und die zweite Hülle (140) voneinander unterschiedliche Wärmeleitfähigkeiten aufweisen.

12. Vakuumwärmeisoliermaterial nach Anspruch 10, wobei:
die erste Hülle (130) eine geringere Wärmeleitfähigkeit als diejenige der zweiten Hülle (140) aufweist.

13. Vakuumwärmeisoliermaterial nach Anspruch 10, wobei:
die erste Hülle (130) eine Aluminiumabscheidungshülle beinhaltet und die zweite Hülle (140) eine Aluminiumfolienhülle beinhaltet.

14. Vakuumwärmeisoliermaterial nach Anspruch 10, ferner umfassend:
eine Blockierschicht (170), die zwischen dem Kernmaterial (110) und der zweiten Hülle (140) angeordnet ist,
wobei die Blockierschicht (170) an die zweite Hülle (140) geschweißt oder geklebt ist, um eine einstückige Einheit mit der zweiten Hülle (140) zu bilden.

15. Vakuumwärmeisoliermaterial nach Anspruch 14, wobei:
die erste Hülle (130) und die zweite Hülle (140) jeweils eine Aluminiumabscheidungshülle beinhalten.

## Revendications

1. Matériau d'isolation thermique sous vide, comprenant :
un matériau d'âme (110) ;
une première enveloppe (130) disposée sur un côté extérieur du matériau d'âme (110) ;
une couche de blocage (170) disposée entre le matériau d'âme (110) et la première enveloppe (130) et collée à la première enveloppe (130) de manière à être formée d'un seul tenant avec la première enveloppe (130) ; et
une seconde enveloppe (140) ayant une conductivité thermique supérieure à une conductivité thermique de la première enveloppe (130) et couplée à la première enveloppe (130) pour former un espace de logement (160) dans lequel le matériau d'âme (110) et la couche de blocage (170) sont logés,
dans lequel la couche de blocage (170) est configurée pour empêcher l'humidité et le gaz de pénétrer dans l'espace de logement (160) ; et
dans lequel la première enveloppe (130) et la seconde enveloppe (140) sont collées l'une à l'autre par soudage ou adhésion pour former une partie d'extension (150) étendue vers un côté extérieur de l'espace de logement (160).

2. Matériau d'isolation thermique sous vide selon la revendication 1, dans lequel :
la partie d'extension (150) est courbée de sorte que la première enveloppe (130) soit positionnée sur un côté extérieur de la seconde enveloppe (140).

3. Matériau d'isolation thermique sous vide selon la revendication 1, dans lequel :
la première enveloppe (130) comprend une couche de soudure (133) à laquelle est collée la couche de blocage (170), et
une couche barrière (180) empilée sur un côté extérieur de la couche de soudure (133).

4. Matériau d'isolation thermique sous vide selon la revendication 3, dans lequel :
la seconde enveloppe (140) comprend une couche d'étanchéité (141) entourant le matériau d'âme (110), et
la couche de soudure (133) et la couche d'étanchéité (141) sont collées l'une à l'autre pour former la partie d'extension (150).

5. Matériau d'isolation thermique sous vide selon la revendication 4, dans lequel :
la couche de soudure (133) et la couche d'étanchéité (141) comprennent chacune au moins l'un du LLDPE (polyéthylène linéaire basse densité) et du LDPE (polyéthylène basse densité).

6. Matériau d'isolation thermique sous vide selon la revendication 3, dans lequel :
la couche barrière (180) est prévue en une pluralité de couches,
la pluralité de couches barrières comprend une couche de substrat (134) et une couche de dépôt (135) disposée face à la couche de substrat (134) de manière à bloquer l'introduction de gaz et d'humidité vers le matériau d'âme (110), et
la couche de dépôt (135) comprend au moins l'un parmi Al, SiO2 et Al2O3.

7. Matériau d'isolation thermique sous vide selon la revendication 6, dans lequel :
la pluralité de couches barrières comprend en outre une couche empêchant la pénétration (136) prévue entre la couche de soudure (133) et la couche de substrat (134), et
la couche empêchant la pénétration (136) comprend au moins l'un de l'EVOH (alcool d'éthylène vinylique) et du VM-EVOH (alcool d'éthylène vinylique métallisé sous vide).

8. Matériau d'isolation thermique sous vide selon la revendication 7, dans lequel :
la pluralité de couches barrières comprend en outre une couche protectrice (137) prévue sur la couche de dépôt (135) de manière à absorber un impact extérieur, et
la couche protectrice (137) comprend au moins l'un parmi le PET (Polyéthylène Téréphtalate) et le nylon.

9. Matériau d'isolation thermique sous vide selon la revendication 3, dans lequel :
la couche de blocage (170) comprend une première couche collée à la couche de soudure (133) par soudage ou adhésion, et une seconde couche empilée sur la première couche vers un côté intérieur du matériau d'âme (110), et
la seconde couche comprend au moins l'une d'une couche de dépôt inorganique et d'une pluralité de couches métalliques.

10. Matériau d'isolation thermique sous vide selon la revendication 1, dans lequel :
la première enveloppe (130) comprend une couche de soudure (133) faisant face à l'espace de logement (160) dans une direction latérale intérieure du matériau d'âme (110), et une pluralité de couches barrières (180) disposée sur la couche de soudure (133) dans une direction latérale extérieure du matériau d'âme (110),
la pluralité de couches barrières (180) comprend une première couche barrière (180a) positionnée sur un côté extérieur de la couche de soudure (133), et une seconde couche barrière (180b) positionnée sur un côté extérieur de la première couche barrière (180a),
la première couche barrière (180a) comprend une première couche de substrat (134a) entourant la couche de soudure (133), et une première couche de dépôt (135a) positionnée sur un côté extérieur de la première couche de substrat (134a),
la seconde couche barrière (180b) comprend une seconde couche de dépôt (135b) faisant face à la première couche de dépôt (135a), et une seconde couche de substrat (134b) positionnée sur un côté extérieur de la seconde couche de dépôt (135b), et
la couche de blocage (170) est soudée ou adhérée à la première enveloppe (130) pour être formée d'un seul tenant avec la première enveloppe (130).

11. Matériau d'isolation thermique sous vide selon la revendication 10, dans lequel :
la première enveloppe (130) et la seconde enveloppe (140) ont des conductivités thermiques différentes l'une de l'autre.

12. Matériau d'isolation thermique sous vide selon la revendication 10, dans lequel :
la première enveloppe (130) a une conductivité thermique inférieure à celle de la seconde enveloppe (140).

13. Matériau d'isolation thermique sous vide selon la revendication 10, dans lequel :
la première enveloppe (130) comprend une enveloppe de dépôt d'aluminium, et la seconde enveloppe (140) comprend une enveloppe en feuille d'aluminium.

14. Matériau d'isolation thermique sous vide selon la revendication 10, comprenant en outre :
une couche de blocage (170) disposée entre le matériau d'âme (110) et la seconde enveloppe (140),
dans lequel la couche de blocage (170) est soudée ou adhérée à la seconde enveloppe (140) pour former une unité d'un seul tenant avec la seconde enveloppe (140).

15. Matériau d'isolation thermique sous vide selon la revendication 14, dans lequel :
la première enveloppe (130) et la seconde enveloppe (140) comprennent chacune une enveloppe de dépôt d'aluminium.
